# EUROPEAN PATENT APPLICATION

(11) **EP 4 682 295 A1**
(43) Date of publication of application: **21.01.2026**
(21) Application number: 24774824.7
(22) Date of filing: 14.03.2024
(51) Int. Cl.: C25B 9/00, C25B 1/042, C25B 9/67, C25B 15/021, C25B 15/08, H01M 8/12

(54) **SOLID OXIDE ELECTROCHEMICAL CELL SYSTEM**

(30) Priority: 17.03.2023 JP 2023043514
(71) Applicant: AISIN CORPORATION, Kariya-shi, Aichi 448-8650 (JP)
(72) Inventor: OGURI, Nobuaki, Kariya-shi, Aichi 448-8650 (JP)
(74) Representative: Cabinet Beau de Loménie
(86) International application number: PCT/JP2024/010023
(87) International publication number: WO 2024/195686

(57) **Abstract**

A solid oxide electrolysis cell system includes: a solid oxide electrolysis cell; a heat storage unit configured to store exhaust heat from outside of the system; a steam generation unit provided in a fuel supply line extending from a water source to a fuel electrode of the solid oxide electrolysis cell and configured to generate steam by using the heat stored in the heat storage unit; and a heat exchange unit provided downstream of the steam generation unit in the fuel supply line and configured to heat, by using the exhaust heat from the solid oxide electrolysis cell, the steam.

## Description

### Technical Field

This disclosure relates to a solid oxide electrolysis cell system.

### Background Art

In the related art, a solid oxide cell system including a solid oxide electrolysis cell is known. For example, PTL 1 discloses a hydrogen production system including an evaporator that heats water to generate steam and an electrolysis cell that electrolyzes the steam, the hydrogen production system including a heat storage tank including a heat storage material (magnesium hydroxide heat storage material), in which heat provided from an external heat source is stored by a dehydration reaction, and the stored heat is radiated to an evaporation unit by a hydration reaction. The evaporation unit is provided with a heater, and when heat is not provided from the external heat source, heating by the heater is also used.

PTL 2 discloses an SOE/SOFC system in which a solid electrolyte cell capable of performing high-temperature steam electrolysis and reversible operation of a solid fuel cell is provided in parallel with a power generation plant such as a nuclear power generation plant or a thermal power generation plant, hydrogen and steam discharged from the cell during SOE (electrolysis) operation are cooled by a regenerative heat exchanger (HX-2) and a heat exchanger (HX-4), and then separated into steam by a separator, and the hydrogen is collected in a hydrogen tank and the water is collected in a water tank. The SOE/SOFC system includes the heat exchanger (HX-4) that heats water from the water tank, a heat exchanger (HX-1) that heats steam for electrolysis by heat from the power generation plant, and a combustor that heats steam for electrolysis by combusting oxygen from an oxygen tank and hydrogen mixed with the steam for electrolysis having passed through the heat exchanger (HX-1).

PTL 3 discloses a system in which a heat source having a temperature of lower than 100°C is used in a heat pump to generate steam and the steam is supplied to an electrolysis cell.

### Citation List

### Patent Literature

PTL 1: JP 2022-144623A
PTL 2: JP 2001-160404A

### Summary of Invention

### Technical Problem

In the solid oxide cell system described in PTL 1, when the external heat source is exhaust heat such as factory exhaust heat, since the heat source has high variability, the heat storage material (magnesium hydroxide heat storage material) cannot use low-temperature exhaust heat of less than 300°C, and thus heat may not be stably supplied to the evaporation unit. Although it is possible to compensate for heat shortage by using the heater in combination, power consumption increases and energy efficiency deteriorates. In the solid oxide cell system described in PTL 2, water is evaporated by heat exchange using the external heat source to generate steam, and as for the heat insufficient in the external heat source, a mixed gas, which is obtained by mixing hydrogen stored in the hydrogen tank under pressure with the steam for electrolysis, is introduced into the combustor and combusted, but since pressurized hydrogen is used, energy loss corresponding to boosting occurs. Since the mixed gas containing hydrogen and steam is introduced into the combustor and contains steam, stable combustion cannot be obtained in the combustor, and the steam for electrolysis may not be sufficiently heated. In the solid oxide cell system described in PTL 3, steam is generated using the heat source having a temperature of lower than 100°C, but a case of using a heat source having high variability is not mentioned at all.

A main object of the solid oxide electrolysis cell system according to the disclosure is to provide a solid oxide electrolysis cell system capable of stably supplying steam for electrolysis even when exhaust heat having high variability is used, and having improved energy efficiency.

### Solution to Problem

The solid oxide electrolysis cell system according to the disclosure employs the following units in order to achieve the above-described main object.

The solid oxide electrolysis cell system of the disclosure is a solid oxide electrolysis cell system including a solid oxide electrolysis cell that generates hydrogen by steam electrolysis, and the solid oxide electrolysis cell system includes:
a heat storage unit configured to store exhaust heat from outside of the system;
a steam generation unit provided in a fuel supply line extending from a water source to a fuel electrode of the solid oxide electrolysis cell and configured to generate steam by using the heat stored in the heat storage unit; and
a heat exchange unit provided downstream of the steam generation unit in the fuel supply line and configured to heat, by using the exhaust heat from the solid oxide electrolysis cell, the steam generated in the steam generation unit.

In the solid oxide electrolysis cell system according to the disclosure, the exhaust heat (low-temperature exhaust heat) from the outside of the system is used for latent heat (state change) of water in the steam generation unit, and high-temperature exhaust heat from the solid oxide electrolysis cell is used for sensible heat (temperature rise) of the steam generated in the steam generation unit. Accordingly, thermal energy can be efficiently used and efficiency of the system can be further improved as compared with the case where the high-temperature exhaust heat from the solid oxide electrolysis cell is used for latent heat. Since the exhaust heat from the outside of the system is stored in the heat storage unit, even when a supply state of the exhaust heat from the outside of the system varies, the heat used for latent heat can be stably supplied.

### Brief Description of Drawings

[Fig. 1] Fig. 1 is a schematic configuration diagram of a solid oxide electrolysis cell system according to an embodiment.
[Fig. 2] Fig. 2 is a schematic configuration diagram of a solid oxide electrolysis cell system according to another embodiment.
[Fig. 3] Fig. 3 is a schematic configuration diagram of a solid oxide electrolysis cell system according to another embodiment.

### Description of Embodiments

Embodiments of the disclosure will be described with reference to the drawings.

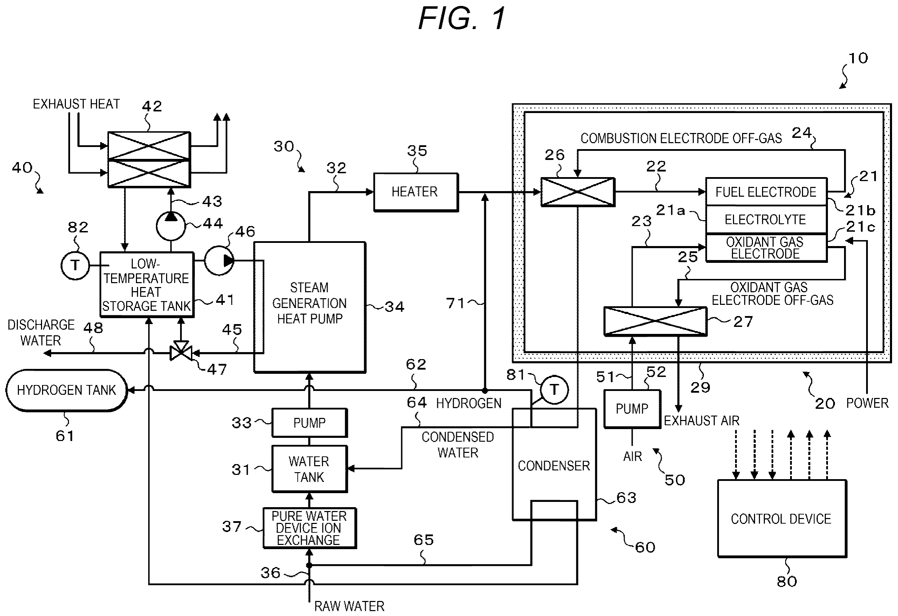

Fig. 1 is a schematic configuration diagram of a solid oxide electrolysis cell system according to an embodiment. A solid oxide electrolysis cell system 10 according to the embodiment includes an electrolysis module 20 including an electrolysis cell stack 21, a steam supply system 30 that supplies steam to the electrolysis module 20, a heat storage supply system 40 that stores exhaust heat from the outside of the system and supplies the exhaust heat to the steam supply system 30 (steam generation heat pump 34), an air supply system 50 that supplies air to the electrolysis module 20, a hydrogen recovery system 60 that recovers hydrogen generated by an electrolysis operation to a hydrogen tank 61, and a control device 80 that controls the entire system.

The electrolysis module 20 includes heat exchangers 26 and 27 and the like in addition to the electrolysis cell stack 21, and these are housed in a module case 29 having a heat insulating property.

The electrolysis cell stack 21 includes a plurality of solid oxide single cells each including a solid electrolyte 21a made of stabilized zirconia (for example, YSZ) and the like, a fuel electrode 21b made of a composite of a catalyst metal such as Ni and the stabilized zirconia and the like disposed on one surface side of the solid electrolyte 21a, and an oxidant gas electrode 21c such as LSCF disposed on the other surface side of the solid electrolyte 21a. The electrolysis cell stack 21 is supplied with power from a power source, and electrolyzes steam supplied to the fuel electrode 21b to generate hydrogen. As the power source, a system power source, renewable energy (for example, a solar photovoltaic device), a storage battery, and the like can be used.

One end of a fuel gas supply pipe 22 is connected to a fuel electrode inlet of the electrolysis cell stack 21, and the steam supply system 30 is connected to the other end of the fuel gas supply pipe 22. The heat exchanger 26 is disposed in the fuel gas supply pipe 22. One end of an oxidant gas supply pipe 23 is connected to an oxidant gas electrode inlet of the electrolysis cell stack 21, and the air supply system 50 is connected to the other end of the oxidant gas supply pipe 23. The heat exchanger 27 is disposed in the oxidant gas supply pipe 23.

One end of a fuel electrode off-gas pipe 24 is connected to a fuel electrode outlet of the electrolysis cell stack 21, and the hydrogen recovery system 60 outside the module case 29 is connected to the other end of the fuel electrode off-gas pipe 24. The fuel electrode off-gas pipe 24 is disposed in the module case 29 so as to pass through the heat exchanger 26. One end of an oxidant gas electrode off-gas pipe 25 is connected to an oxidant gas electrode outlet of the electrolysis cell stack 21. The oxidant gas electrode off-gas pipe 25 is disposed to pass through the heat exchanger 27.

The steam supply system 30 includes a water tank 31 that stores water (raw material water), a steam supply pipe 32 having one end connected to the water tank 31 and the other end connected to the fuel gas supply pipe 22, and a water pump 33, the steam generation heat pump 34, and a heater 35 that are disposed in this order from an upstream side of the steam supply pipe 32. The steam supplied to the fuel gas supply pipe 22 by the steam supply system 30 is heated to a required temperature by heat exchange with a combustion electrode off-gas in the heat exchanger 26, and then supplied to the fuel electrode 21b of the electrolysis cell stack 21.

A raw water supply pipe 36 to which raw water is supplied is connected to the water tank 31, and a pure water device 37 is disposed in the raw water supply pipe 36. In the embodiment, the pure water device 37 is implemented as an ion exchange resin type pure water device that has an ion exchange resin and removes impurities by exchanging ions on a resin surface with ionic impurities contained in the raw water to convert the raw water into pure water. The steam generation heat pump 34 is supplied with heat stored in the heat storage supply system 40 and uses the heat in the heat pump to generate steam (saturated steam). The heater 35 is an electric heater such as a sheath heater, and assists heat application when heat is insufficient in the steam generation heat pump 34 and a sufficient amount of steam cannot be generated.

The heat storage supply system 40 includes a low-temperature heat storage tank 41 that stores hot water (heat storage medium), a heat exchanger 42 that heats the hot water by heat exchange with exhaust heat outside the system, a circulation pipe 43 that connects the low-temperature heat storage tank 41 and the heat exchanger 42, and a circulation pump 44 disposed in the circulation pipe 43. By driving the circulation pump 44, the hot water stored in the low-temperature heat storage tank 41 is heated by heat exchange with the exhaust heat in the heat exchanger 42, and is returned to the low-temperature heat storage tank 41. As the exhaust heat outside the system, for example, exhaust heat at a low temperature (for example, 100°C or lower) that cannot be used (unused exhaust heat) is used in a facility that generates a lot of exhaust heat, such as factory exhaust heat. By effectively utilizing the unused exhaust heat, efficiency of the system can be improved.

The heat storage supply system 40 further includes a circulation pipe 45 that connects the low-temperature heat storage tank 41 and the steam generation heat pump 34, a circulation pump 46 disposed in the circulation pipe 45, a water discharge pipe 48 that branches from downstream of the steam generation heat pump 34 in the circulation pipe 45 and discharges a part of the hot water, and a regulating valve 47 that is disposed at a branch point of the circulation pipe 45 and regulates a water discharge amount of the hot water. By driving the circulation pump 46, the heated hot water in the low-temperature heat storage tank 41 is supplied to the steam generation heat pump 34, used by the heat pump, and then returned to the low-temperature heat storage tank 41. A part of the hot water that has passed through the steam generation heat pump 34 is discharged from the regulating valve 47 through the water discharge pipe 48.

The air supply system 50 includes an air supply pipe 51 having one end connected to a filter (not shown) and the other end connected to the oxidant gas supply pipe 23, and an air pump 52 disposed in the air supply pipe 51. By driving the air pump 52, the air sucked into the air supply pipe 51 via the filter passes through the heat exchanger 27, is heated to a required temperature, and is then supplied to the oxidant gas electrode 21c of the electrolysis cell stack 21.

The hydrogen recovery system 60 includes the hydrogen tank 61 that stores hydrogen, a recovery pipe 62 having one end connected to the hydrogen tank 61, a condenser 63 that condenses steam contained in the fuel electrode off-gas, and a boosting pump (not shown) that boosts hydrogen in the recovery pipe 62 and feeds the hydrogen to the hydrogen tank 61. The condenser 63 has a heat exchange flow path capable of exchanging heat with cooling water (raw water) flowing through a cooling water supply pipe 65 branched from the raw water supply pipe 36, the other end of the fuel electrode off-gas pipe 24 is connected to an inlet of the heat exchange flow path, and the other end of the recovery pipe 62 is connected to an outlet of the heat exchange flow path. The fuel electrode off-gas containing hydrogen and steam supplied to the condenser 63 is subjected to heat exchange with the cooling water (raw water), so that the steam contained in the fuel electrode off-gas is condensed, and is then recovered in the hydrogen tank 61 through the recovery pipe 62 by driving the boosting pump. Condensed water obtained by condensation of the fuel electrode off-gas in the condenser 63 is stored in the water tank 31 through a condensed water pipe 64. The water stored in the water tank 31 is used to generate steam for electrolysis. A temperature sensor 81 for detecting a temperature of the fuel electrode off-gas after passing through the condenser 63 is disposed near the outlet of the heat exchange flow path. A supply amount of the cooling water to the condenser 63 is adjusted such that a temperature from the temperature sensor 81 becomes a temperature necessary for recovering high-purity hydrogen.

The recovery pipe 62 is connected to a reduction hydrogen supply pipe 71 that is branched from the recovery pipe 62 and refluxes, as reduction hydrogen, a part of the fuel electrode off-gas having passed through the condenser 63 to the fuel gas supply pipe 22. The reduction hydrogen is used to maintain the fuel electrode 21b in a reducing atmosphere and prevent oxidative degradation of the material (Ni) of the fuel electrode 21b.

The low-temperature heat storage tank 41 is connected to the other end of the cooling water supply pipe 65. The cooling water heated by heat exchange with the combustion electrode off-gas in the condenser 63 is stored in the low-temperature heat storage tank 41 through the cooling water supply pipe 65.

Although not shown, the control device 80 is implemented as a microprocessor including a CPU as a main component, and includes, in addition to the CPU, a ROM for storing a processing program, a RAM for temporarily storing data, and an input and output port. Temperature signals from a temperature sensor disposed near the electrolysis cell stack 21, the temperature sensor 81 disposed near the heat exchange flow path outlet of the condenser 63, a temperature sensor 82 disposed in the low-temperature heat storage tank 41, and the like, flow rate signals from a flow rate sensor disposed in the steam supply pipe 32, a flow rate sensor disposed in the air supply pipe 51, and the like are input to the control device 80 via an input port. On the other hand, the control device 80 outputs control signals to the water pump 33, the air pump 52, the circulation pumps 44 and 46, and the like via an output port.

Next, an operation (electrolysis operation) of the solid oxide electrolysis cell system 10 according to the embodiment implemented as described above will be described.

In the electrolysis operation, steam as a fuel gas is introduced into the fuel electrode 21b of the electrolysis cell stack 21 through the fuel gas supply pipe 22 together with a slight amount of reduction hydrogen by the steam supply system 30, and air as a sweep gas is introduced into the oxidant gas electrode 21c of the electrolysis cell stack 21 through the oxidant gas supply pipe 23 by the air supply system 50. When power of a predetermined voltage is supplied between terminals of the electrolysis cell stack 21 by the power source, the steam introduced into the fuel electrode 21b is decomposed into hydrogen and oxygen ions (O²⁻) by an electrolysis action in the fuel electrode 21b, and the oxygen ions permeate the solid electrolyte 21a to generate oxygen in the oxidant gas electrode 21c. In the embodiment, since a slight amount of reduction hydrogen is also supplied to the fuel electrode 21b together with steam, the fuel electrode 21b is maintained in the reducing atmosphere, and oxidative degradation of the fuel electrode 21b can be prevented.

The hydrogen generated in the fuel electrode 21b is discharged to the fuel electrode off-gas pipe 24 as the fuel electrode off-gas together with the steam not subjected to electrolysis, passes through the heat exchanger 26, exchanges heat with the steam flowing through the fuel gas supply pipe 22, and is then supplied to the hydrogen recovery system 60. Further, the fuel electrode off-gas supplied to the hydrogen recovery system 60 is cooled by heat exchange with the cooling water (raw water) in the condenser 63 to remove the steam, and then passes through the recovery pipe 62, is boosted by the boosting pump, and is recovered in the hydrogen tank 61. A part of the fuel electrode off-gas that has passed through the condenser 63 is refluxed as reduction hydrogen to the fuel gas supply pipe 22 through the reduction hydrogen supply pipe 71 and is supplied to the fuel electrode 21b of the electrolysis cell stack 21.

In the solid oxide electrolysis cell system 10 according to the embodiment, unused exhaust heat outside the system is stored in the low-temperature heat storage tank 41, and the water in the water tank 31 is converted into steam in the steam generation heat pump 34 by using the heat stored in the low-temperature heat storage tank 41 by the heat pump. The steam is heated to a necessary temperature by heat exchange with the fuel electrode off-gas discharged from the fuel electrode 21b of the electrolysis cell stack 21 in association with the electrolysis operation, and then supplied to the fuel electrode 21b. Accordingly, the unused exhaust heat can be used for latent heat (state change) of water, and a high-temperature fuel electrode off-gas can be used for sensible heat (temperature rise) of steam, so that heat can be efficiently used to further improve system efficiency.

Here, in the embodiment, in order to stably generate steam by the steam generation heat pump 34, the hot water in the low-temperature heat storage tank 41 is managed so as to be maintained in a certain temperature range (for example, 60°C to 80°C). Temperature management of the hot water is performed by controlling the regulating valve 47 to regulate the water discharge amount such that the temperature of the hot water in the low-temperature heat storage tank 41 from the temperature sensor 82 becomes a predetermined target water temperature (for example, 80°C). In adjusting the water discharge amount, the supply amount of the cooling water supplied to the low-temperature heat storage tank 41 through the condenser 63 or a temperature of the cooling water after passing through the condenser 63 may be considered.

In the solid oxide electrolysis cell system 10 according to the embodiment described above, exhaust heat (low-temperature exhaust heat) from the outside of the system is used for latent heat (state change) of water in the steam generation heat pump 34, and high-temperature exhaust heat (fuel electrode off-gas) from the electrolysis cell stack 21 is used for sensible heat (temperature rise) of steam. Accordingly, the efficiency of the system can be further improved by effectively using the high-temperature exhaust heat as compared with the case where the high-temperature exhaust heat from the electrolysis cell stack 21 is used for the latent heat of water. Since the exhaust heat from the outside of the system is stored in the low-temperature heat storage tank 41, even when a supply state of the exhaust heat from the outside of the system varies, the heat used for the latent heat of water can be stably supplied.

In the solid oxide electrolysis cell system 10 according to the embodiment, the steam contained in the fuel electrode off-gas from the fuel electrode 21b of the electrolysis cell stack 21 is condensed by heat exchange with the cooling water in the condenser 63, and the cooling water having passed through the condenser 63 is supplied to the low-temperature heat storage tank 41 to control the temperature in the low-temperature heat storage tank 41. Accordingly, it is possible to control the temperature of the low-temperature heat storage tank 41 using the cooling water heated by heat exchange with the steam while condensing the steam contained in the fuel electrode off-gas. Therefore, even when the supply state of the exhaust heat outside the system varies, a heat storage state of the low-temperature heat storage tank 41 can be further stabilized.

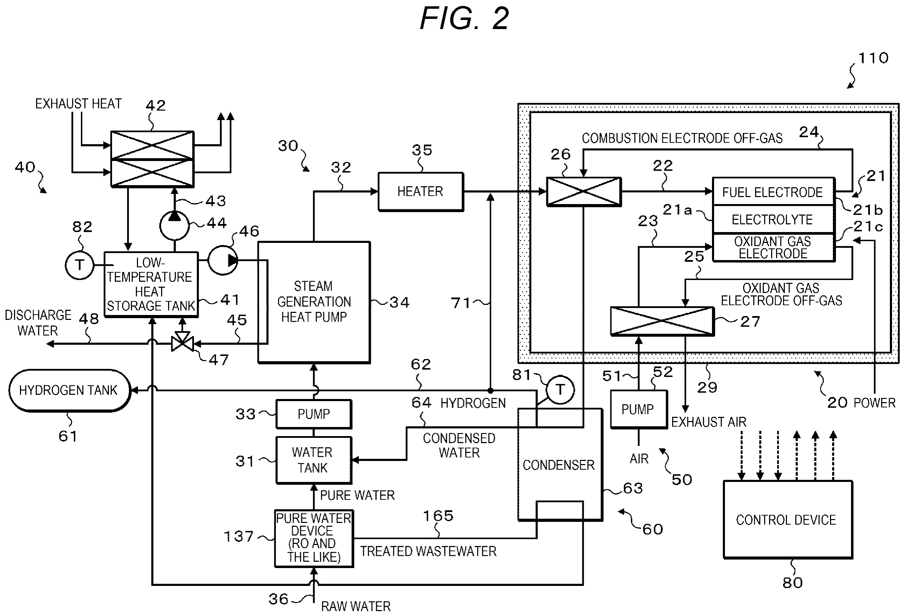

In the above-described embodiment, the raw water is supplied to the low-temperature heat storage tank 41 after passing through the condenser 63 by using the cooling water supply pipe 65 branched from the raw water supply pipe 36. However, as shown in a solid oxide electrolysis cell system 110 according to another embodiment of Fig. 2, when a type of pure water device (for example, an RO type pure water device that performs filtration with a reverse osmosis membrane) that separates pure water and treated wastewater from raw water is used as a pure water device 137, the treated wastewater may be used as cooling water and supplied to the low-temperature heat storage tank 41 after passing through the condenser 63.

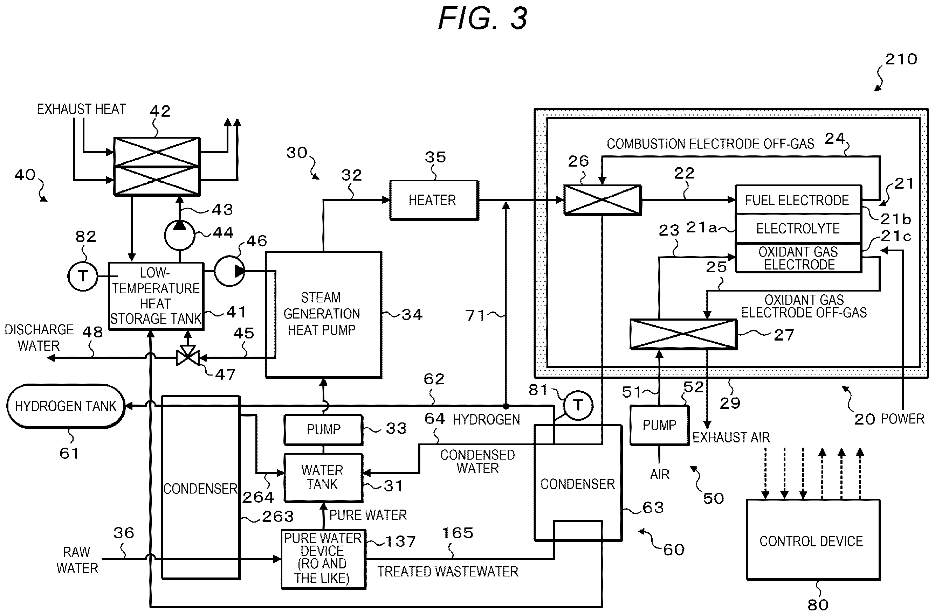

In the above-described embodiment, the hydrogen recovery system 60 includes one condenser 63, but as shown in a solid oxide electrolysis cell system 210 according to another embodiment of Fig. 3, a second condenser 263 may be provided in addition to the condenser 63, and the steam contained in the fuel electrode off-gas may be condensed by the condenser 63 and the second condenser 263. The second condenser 263 receives the fuel electrode off-gas that has passed through the condenser 63, receives the raw water as the cooling water from the raw water supply pipe 36, and condenses residual steam contained in the fuel electrode off-gas by heat exchange between the fuel electrode off-gas and the cooling water (raw water). Condensed water obtained by the condensation of the fuel electrode off-gas is stored in the water tank 31 through a condensed water pipe 264. Accordingly, the purity of the hydrogen recovered in the hydrogen tank 61 can be further increased, and the temperature of the hot water in the low-temperature heat storage tank 41 can be controlled using the cooling water having passed through the two condensers.

In the above-described embodiment, the steam supplied from the steam supply system 30 to the fuel gas supply pipe 22 is heated by heat exchange with the fuel electrode off-gas in the heat exchanger 26, but may be heated by heat exchange with an oxidant gas electrode off-gas.

In the above-described embodiment, the steam supply system 30 generates, by the steam generation heat pump 34, steam by using the exhaust heat outside the system by the heat pump. However, for example, a heat exchanger may be disposed instead of the steam generation heat pump 34, and water may be heated by heat exchange with the exhaust heat outside the system in the heat exchanger, and then steam may be generated by the heater 35.

In the above embodiment, a part of the fuel electrode off-gas that has passed through the condenser 63 and from which steam has been removed is supplied as the reduction hydrogen to the fuel electrode 21b of the electrolysis cell stack 21. However, the pressurized hydrogen in the hydrogen tank 61 may be supplied to the fuel electrode 21b. A fuel electrode off-gas reflux pipe branched from the fuel electrode off-gas pipe 24 and connected to the fuel gas supply pipe 22 may be provided, and a part of the fuel electrode off-gas flowing through the fuel electrode off-gas pipe 24 may be refluxed to the fuel electrode 21b as the reduction hydrogen.

In the above embodiment, the solid oxide electrolysis cell system 10 performs an electrolysis operation of generating hydrogen by high-temperature steam electrolysis. However, the solid oxide electrolysis cell system 10 may have an EC mode in which the above-described electrolysis operation is performed by using the electrolysis cell stack 21 as a reversible operation solid oxide cell stack, and an FC mode in which a power generation operation of generating power by a reaction between hydrogen as a fuel gas and oxygen contained in an oxidant gas is performed. In the FC mode, hydrogen from the hydrogen tank 61 is introduced as the fuel gas into the fuel electrode 21b of the electrolysis cell stack 21 through the fuel gas supply pipe 22, and air from the air supply system 50 is introduced as the oxidant gas into an air electrode of the electrolysis cell stack 21 through the oxidant gas supply pipe 23. At the oxidant gas electrode 21c, oxide ions (O²⁻) are generated, and the oxide ions permeate the solid electrolyte 21a and react with hydrogen at the fuel electrode 21b to obtain electrical energy.

### [Summary of Embodiments]

As described above, a solid oxide electrolysis cell system (10, 110, 210) according to the disclosure is a solid oxide electrolysis cell system (10, 110, 210) including a solid oxide electrolysis cell (21) that generates hydrogen by steam electrolysis. The solid oxide electrolysis cell system (10, 110, 210) includes: a heat storage unit (41) configured to store exhaust heat from outside of the system; a steam generation unit (34) provided in a fuel supply line (32, 22) extending from a water source (31) to a fuel electrode (21b) of the solid oxide electrolysis cell (21) and configured to generate steam by using the heat stored in the heat storage unit (41); and a heat exchange unit (26) provided downstream of the steam generation unit (34) in the fuel supply line (32, 22) and configured to heat, by using the exhaust heat from the solid oxide electrolysis cell (21), the steam generated in the steam generation unit (34).

In the solid oxide electrolysis cell system according to the disclosure, the exhaust heat (low-temperature exhaust heat) from the outside of the system is used for latent heat (state change) of water in the steam generation unit, and high-temperature exhaust heat from the solid oxide electrolysis cell is used for sensible heat (temperature rise) of the steam generated in the steam generation unit. Accordingly, thermal energy can be efficiently used and efficiency of the system can be further improved as compared with the case where the high-temperature exhaust heat from the solid oxide electrolysis cell is used for latent heat. Since the exhaust heat from the outside of the system is stored in the heat storage unit, even when a supply state of the exhaust heat from the outside of the system varies, the heat used for latent heat can be stably supplied.

The solid oxide electrolysis cell system (10, 110, 210) according to the disclosure may further include: a condensation unit (63, 263) configured to condense steam contained in a fuel electrode off-gas from the fuel electrode (21b) of the solid oxide electrolysis cell (21) by heat exchange with a cooling medium; and a cooling medium supply line (65, 165) configured to supply the cooling medium having passed through the condensation unit (63, 263) to the heat storage unit (41).

Accordingly, it is possible to control a temperature of the heat storage unit using the cooling medium heated by heat exchange with the steam while condensing the steam contained in the fuel electrode off-gas. Therefore, even when the supply state of the exhaust heat outside the system varies, a heat storage state of the heat storage unit can be further stabilized.

The solid oxide electrolysis cell system (10, 110, 210) according to an aspect of the disclosure including the cooling medium supply line (65, 165) may further include: a pure water device (37) configured to generate pure water from raw water; and a water tank (31) as the water source connected to the fuel supply line (32, 33) and configured to store the pure water. The condensation unit (63) may condense the steam contained in the fuel electrode off-gas by heat exchange with the raw water as cooling liquid. The cooling medium supply line (65) may supply the raw water having passed through the condensation unit (63) to the heat storage unit (41). The solid oxide electrolysis cell system (10, 110, 210) may include: a pure water device (137) configured to separate raw water into pure water and treated wastewater; and a water tank (31) as the water source connected to the fuel supply line (32, 33) and configured to store the pure water. The condensation unit (63) may condense the steam contained in the fuel electrode off-gas by heat exchange with the treated wastewater as the cooling medium. The cooling medium supply line (165) may supply the treated wastewater having passed through the condensation unit (63) to the heat storage unit (41).

Accordingly, it is possible to control the temperature of the heat storage unit with a simple configuration.

In the solid oxide electrolysis cell system (10, 110, 210) according to an aspect of the disclosure including the cooling medium supply line (165), the condensation unit (63, 263) may include: a first condensation unit (63) configured to condense the steam contained in the fuel electrode off-gas by heat exchange with the cooling medium, and a second condensation unit (263) configured to condense residual steam contained in the fuel electrode off-gas having passed through the first condensation unit (63) by heat exchange with the cooling medium. The cooling medium supply line (165) may allow the cooling medium to pass through the second condensation unit (263) and the first condensation unit (63) in order, and supply the cooling medium having passed through the first condensation unit (63) to the heat storage unit (41).

Accordingly, it is possible to recover hydrogen generated in association with an electrolysis operation with higher purity and to control the temperature of the heat storage unit using the cooling medium used for condensation.

The above describes the form for implementing the disclosure using the embodiments, but the disclosure is not limited to the embodiments in any way, and it goes without saying that the disclosure can be implemented in various forms without departing from the gist of the disclosure.

### Industrial Applicability

The disclosure can be utilized in a production industry of a solid oxide electrolysis cell system.

### Reference Signs List

10, 110, 210: solid oxide electrolysis cell system
21: electrolysis cell stack (solid oxide electrolysis cell)
21b: fuel electrode
22: fuel gas supply pipe (fuel supply line)
26: heat exchanger (heat exchange unit)
31: water tank
32: steam supply pipe (fuel supply line)
34: steam generation heat pump (steam generation unit)
37, 137: pure water device
41: low-temperature heat storage tank (heat storage unit)
63: condenser (condensation unit, first condensation unit)
65, 165: cooling water supply pipe (cooling medium supply line)
263: second condenser (condensation unit, second condensation unit)

## Claims

1. A solid oxide electrolysis cell system including a solid oxide electrolysis cell that generates hydrogen by steam electrolysis, the solid oxide electrolysis cell system comprising:
a heat storage unit configured to store exhaust heat from outside of the system;
a steam generation unit provided in a fuel supply line extending from a water source to a fuel electrode of the solid oxide electrolysis cell and configured to generate steam by using the heat stored in the heat storage unit; and
a heat exchange unit provided downstream of the steam generation unit in the fuel supply line and configured to heat, by using the exhaust heat from the solid oxide electrolysis cell, the steam generated in the steam generation unit.

2. The solid oxide electrolysis cell system according to claim 1, further comprising:
a condensation unit configured to condense steam contained in a fuel electrode off-gas from the fuel electrode of the solid oxide electrolysis cell by heat exchange with a cooling medium; and
a cooling medium supply line configured to supply the cooling medium having passed through the condensation unit to the heat storage unit.

3. The solid oxide electrolysis cell system according to claim 2, further comprising:
a pure water device configured to generate pure water from raw water; and
a water tank as the water source connected to the fuel supply line and configured to store the pure water, wherein
the condensation unit condenses the steam contained in the fuel electrode off-gas by heat exchange with the raw water as cooling liquid, and
the cooling medium supply line supplies the raw water having passed through the condensation unit to the heat storage unit.

4. The solid oxide electrolysis cell system according to claim 2, further comprising:
a pure water device configured to separate raw water into pure water and treated wastewater; and
a water tank as the water source connected to the fuel supply line and configured to store the pure water, wherein
the condensation unit condenses the steam contained in the fuel electrode off-gas by heat exchange with the treated wastewater as the cooling medium, and
the cooling medium supply line supplies the treated wastewater having passed through the condensation unit to the heat storage unit.

5. The solid oxide electrolysis cell system according to claim 2, wherein
the condensation unit includes a first condensation unit configured to condense the steam contained in the fuel electrode off-gas by heat exchange with the cooling medium, and a second condensation unit configured to condense residual steam contained in the fuel electrode off-gas having passed through the first condensation unit by heat exchange with the cooling medium, and
the cooling medium supply line allows the cooling medium to pass through the second condensation unit and the first condensation unit in order, and supplies the cooling medium having passed through the first condensation unit to the heat storage unit.
